# EUROPEAN PATENT SPECIFICATION

(11) **EP 4 080 391 B1**
(45) Date of publication and mention of the grant of the patent: **30.07.2025**
(21) Application number: 22168873.2
(22) Date of filing: 19.04.2022
(51) Int. Cl.: G06F 21/42, H04L 9/40

(54) **DIGITAL KEY DEVICE AND METHOD FOR ACTIVATING DIGITAL KEY SERVICE**
DIGITALE SCHLÜSSELVORRICHTUNG UND VERFAHREN ZUM AKTIVIEREN EINES DIGITALEN SCHLÜSSELDIENSTES
DISPOSITIF À CLÉ NUMÉRIQUE ET PROCÉDÉ POUR ACTIVER UN SERVICE DE CLÉ NUMÉRIQUE

(30) Priority: 19.04.2021 TW 110113909
(43) Date of publication of application: 26.10.2022
(73) Proprietor: InfoKeyVault Technology Co., Ltd., Wenshan District, Taipei City 11674 (TW)
(72) Inventor: CHENG, Chia-Hsin, 11674 Taipei City (TW); HSIAO, Chih-Ping, 11674 Taipei City (TW); WU, Ming-Ting, 11674 Taipei City (TW)
(74) Representative: Reichert & Lindner Partnerschaft Patentanwälte

(56) References cited:
- US-A1- 2006 069 814
- "The YubiKey Manual Version: 3.3", 17 September 2014 (2014-09-17), XP055231994, Retrieved from the Internet <URL:https://web.archive.org/web/20141019231331/https://www.yubico.com/wp-content/uploads/2014/10/YubiKey-Manual-v3.3.pdf> [retrieved on 20151127]

## Description

### FIELD OF THE INVENTION

The present disclosure relates to a digital key device and a method for activating a digital key service provided by the digital key device, particularly to a digital key device applied to a user information device and a method for activating a digital key service provided by the digital key device.

### BACKGROUND OF THE INVENTION

With the development of information technology, more and more secret or private data (e.g. accounts and passwords) are generated, but are stored along with non-confidential data in a user information device such as personal computer, notebook or smartphone without reliable security mechanism particularly for the secret and private data. In recent years, a smartphone or other similar portable information device is frequently used to be communicated with another information device or a server over the cloud through various data transmission channels, e.g. USB interface, Bluetooth or wireless network for data interchange or financial transaction. These secret or private data are probably stolen due to insufficient information security mechanism and thus causes unfavorable damages. For example, a hacker may hack into the user information device and input a correct personal identification number (PIN) to log in the user information device successfully. Therefore, the hacker can arbitrarily access and exploit the important data stored in the user information device. It is desired to improve the data security of the existing user information device to provide enhanced data protection.

US 2006/0069814 A1 discloses the features of the characterizing portion of claim 1, and in particular a mass storage device including a public partition and a private partition. Access to the private partition is allowed if an authentic credential is received. The mass storage device may include data input devices (e.g. buttons) associated with different data components stored in the mass storage device.

"The YubiKey Manual Version: 3.3", 17 September 2014, XP055231994, retrieved from the Internet: https://www.yubico.com/ wp-content/uploads/2014/10/YubiKey-Manual-v3.3.pdf introduces an authentication device, which can generate one time passwords (OTPs) when the YubiKey is inserted into a USB port and the user touches the OTP generation button of the YubiKey for authentication purposes.

### SUMMARY OF THE INVENTION

An aspect of the present disclosure provides a digital key device adapted to be in communication with a host. The digital key device includes a casing, an input device, a data storage unit and a controlling unit. The input device is disposed near the casing or mounted on the casing and configured to receive a first user operation input. The data storage unit and the controlling unit are disposed in the casing. The data storage unit is configured to store digital data and a digital key. The controlling unit is in communication with the host, the input device and the data storage unit. The controlling unit uses the digital key stored in the data storage unit to perform a digital key service or outputs the digital data stored in the data storage unit to the host when authentication is complete. The authentication includes a first operation verification procedure for verifying the first user operation input, and the authentication is complete when the controlling unit determines that the first user operation input conforms to a first preset timing-based input set.

In an embodiment, the first user operation input is a gesture operation input and the input device is a touch button, a physical button or a touch pad exposed from the casing. The input device receives one or more user touch or pressing actions applied to the input device to generate one or more timing-based input events in response to the one or more user touch or pressing actions. Alternatively, the input device is a vibration sensor disposed in the casing. The vibration sensor senses vibration or touch made on the casing held by the user to generate the one or more timing-based input events in response to the vibration or touch made on the casing.

In an embodiment, the first user operation input is an audio operation input and the input device is a microphone disposed on the casing. The microphone senses a sound made by the user to generate the one or more timing-based input events in response to a rhythm of the sound.

In an embodiment, the one or more timing-based input events are generated according to a specific rhythm of the first user operation input and conform to an encoding format.

In an embodiment, the digital key device includes a prompting device issuing a light signal or a sound signal to prompt the user for input timing of the first user operation input.

In an embodiment, the authentication further includes a personal identification number verification procedure prior to the first operation verification procedure after the digital key device is electrically coupled to the host. The digital key device receives a personal identification number from the host and verifies the received personal identification number.

In an embodiment, the authentication further includes a second operation verification procedure posterior to the first operation verification procedure. The digital key device activates the second operation verification procedure to verify whether a second user operation input conforms to a second preset timing-based input set after completing the first operation verification procedure and receiving a data read command from the host. The controlling unit outputs the digital data to the host in response to the data read command after the authentication is passed.

In an embodiment, the digital key service is using the digital key to encrypt first data received from the host to generate encrypted data with a digital signature. The digital key device activates the second operation verification procedure after completing the first operation verification procedure and receiving a digital signing command from the host. The controlling unit outputs the encrypted data with the digital signature to the host in response to the digital signing command after the authentication is passed.

In an embodiment, the digital key service is using the digital key to encrypt first data or decrypt second data received from the host to generate first encrypted data or second decrypted data. The digital key device activates the second operation verification procedure after completing the first operation verification procedure and receiving a data encrypt command or a data decrypt command from the host. The controlling unit outputs the first encrypted data or the second decrypted data to the host or stores the first encrypted data or the second decrypted data in the data storage unit in response to the data encrypt command or the data decrypt command after the authentication is passed.

In an embodiment, the data storage unit includes a first data storage unit and a second data storage unit. The digital key is stored in the first data storage unit disposed in a secure element, and the digital data are stored in the second data storage unit separate from the secure element.

Another aspect of the present disclosure provides a method for activating a digital key service used with a host and a digital key device which stores therein digital data and a digital key. In the method, a first user operation input is provided to the digital key device. The digital key device automatically activates the digital key service using the digital key stored in the digital key device or automatically outputs the digital data to the host when authentication is complete. The authentication includes a first operation verification procedure for verifying the first user operation input, and the authentication is complete when the digital key device determines that the first user operation input conforms to a first preset timing-based input set.

In an embodiment, the first user operation input is a gesture operation input including one or more touch actions, one or more sliding actions, one or more pressing actions, or one or more shaking actions applied to the digital key device corresponding to one or more timing-based input events.

In an embodiment, the first user operation input is an audio operation input including one or more sound-making actions of the user. The one or more sound-making actions follow a rhythm and are corresponding to one or more timing-based input events.

### BRIEF DESCRIPTION OF THE DRAWINGS

The advantages of the present disclosure will become more readily apparent to those ordinarily skilled in the art after reviewing the following detailed description and accompanying drawings, in which:
FIG. 1 is a block diagram illustrating a digital key device in communication with a host according to an embodiment of the present disclosure;
FIG. 2 is a sequence diagram showing authentication between the digital key device and the host according to an embodiment of the present disclosure;
FIG. 3 is a block diagram illustrating a digital key device in communication with a host according to another embodiment of the present disclosure;
FIG. 4 is a sequence diagram showing a data reading method according to an embodiment of the present disclosure;
FIG. 5 is a sequence diagram showing a data encryption/decryption method according to an embodiment of the present disclosure; and
FIG. 6 is a block diagram illustrating a digital key device in communication with a host according to a further embodiment of the present disclosure.

### DETAILED DESCRIPTION OF PREFERRED EMBODIMENTS

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

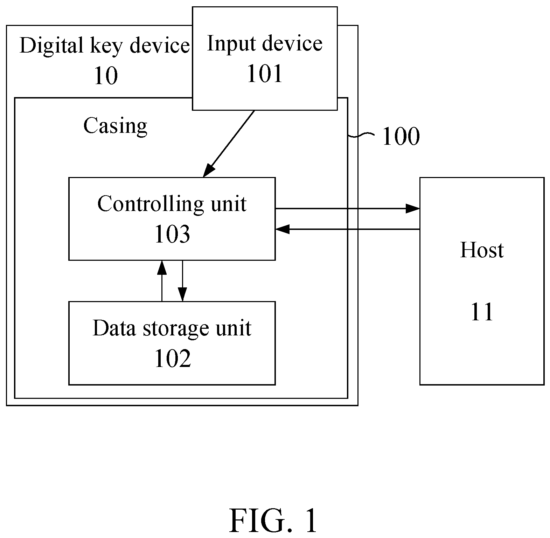

Please refer to FIG. 1, which is a block diagram illustrating a digital key device according to an embodiment of the present disclosure. The digital key device 10 is configured to be in communication with a host 11. The communication type may be based on a wired communication technology (e.g. a Universal Serial Bus (USB) connector electrically coupled to a USB receptacles or a memory interface electrically coupled to a memory card slot) or a wireless communication technology (e.g. Bluetooth connection). The digital key device 10 includes a casing 100, an input device 101, a data storage unit 102 and a controlling unit 103. The data storage unit 102 and the controlling unit 103 are disposed in the casing 100. The data storage unit 102 is configured to store digital data and a digital key. In the embodiment, the input device 101 is mounted on the casing 100 to receive user operation input. The user operation input means on-site operation wherein the user and the digital key device 10 are located in the same space. There is only a short distance between the user and the digital key device 10. The on-site operation made by the user is sensed by the digital key device 10 directly without introducing other signal transmission medium. In an embodiment, the user operation input is a gesture operation provided by the user, referred as user gesture operation input hereinafter. For example, the input device 101 is a touch button, a physical button or a touch pad exposed from the casing 100 for sensing the user touch action, user sliding action or user pressing action applied onto the button. The digital key device 10, in a portable hardware form, could be like a USB device in appearance for being plugged in a computer, or the digital key device 10 could be like a Secure Digital (SD) memory card in appearance for being inserted into a notebook, a tablet computer or a smartphone.

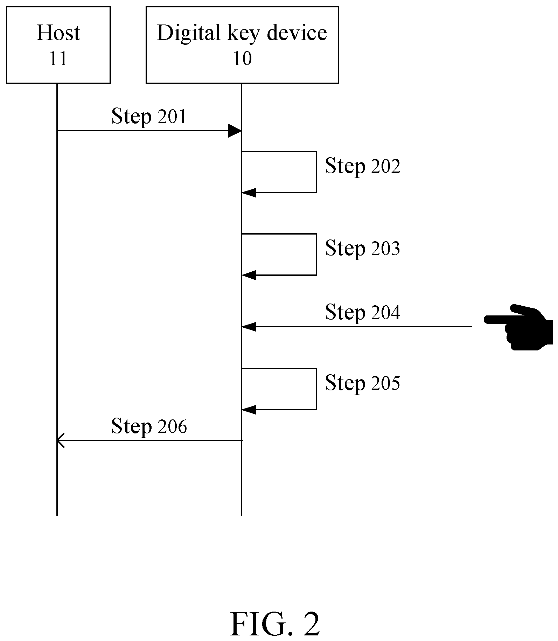

Please refer to FIG. 2, which is a sequence diagram showing authentication between the digital key device 10 and the host 11 according to an embodiment of the present disclosure. At first, the host 11 sends a personal identification number (PIN) to the digital key device 10 electrically coupled to the host 11 (Step 201). Then, the digital key device 10 verifies whether the personal identification number is correct (Step 202). If the personal identification number is verified correct, the digital key device 10 enters a wait mode to wait for user input (Step 203). Once the user provides a user gesture operation input through the input device 101 (Step 204), the digital key device 10 exits the wait mode. The controlling unit 103 performs a first gesture operation verification procedure on the user gesture operation input provided through the input device 101 (Step 205). If the user gesture operation input is verified correct, the digital key device 10 issues an authentication pass message to the host 11 (Step 206). By means of this method, the authentication between the digital key device 10 and the host 11 is carried out efficiently. The double and two-way verification including the personal identification number verification procedure and the gesture operation verification procedure can protect the digital key device 10 from remote hacking.

Thus, even though the host 11 is under remote hacking and controlled to send a correct personal identification number to the digital key device 10, the gesture operation applied on the input device 101 of the digital key device 10 provides further security mechanism. The first gesture operation verification procedure is passed only when the controlling unit 103 judges that the digital key device 10 receives the correct user gesture operation input. The user gesture operation, i.e. on-site operation, can not be made through remote hacking so that malicious access to the digital key device 10 is impeded.

The input device 101 could be a touch button, a touch pad or a physical button mounted on or exposed from the casing 100 of the digital key device 10 to receive a single or a series of touch actions, a single or a series of sliding actions or a single or a series of pressing actions constructing the user gesture operation input. The user gesture operation input is verified correct only when all input event(s) of the user gesture operation input substantially occur in a preset timing and sequence. We say that the user gesture operation input conforms to a preset timing-based input set in this condition. By way of illustration, the user gesture operation input and the timing-based input set includes a plurality of timing-based input events. In an embodiment, the timing-based input events may represent strokes or lines constituting a character, word or pattern, and the user should draw the strokes or lines on a touch pad which is provided for sensing the touch actions. In another embodiment, the timing-based input events may represent a sequence of taps having specific durations (e.g. Morse code or other code with a specific encoding format), and the user should tap on the touch button or click the button in a specific manner. Concretely speaking, for using the Morse code, the user taps the button for dot duration, taps and holds the button for dash duration, and releases the button for space duration. Alternatively, the user could directly draw dashes and dots on the touch pad which can sense the touch actions to provide the timing-based input events in the form of the Morse code. The timing and sequence of the input events in the timing-based input set, representing the pattern, the strokes, the codes or any other sensible physical/gesture operation input or their combination with a specific timing and sequence, could be preset and predefined by the user. In another embodiment, the timing and sequence of the input events in the timing-based input set could be preset by the manufacturer before the sale.

In another embodiment, the input device 101 is implemented by a vibration sensor, e.g. accelerometer or piezoelectric sensor disposed in the casing 100 without exposing from the casing 100. The user gesture operation input may include holding the casing 100 and vibrating it or touching a designated area of the casing 100 directly to provide the timing-based input events. This type of user gesture operation input is also useful to confirm whether the user stays with the digital key device 10 or not.

In a further embodiment, the user operation input is an audio operation input and the input device 101 is a sound receiving device, e.g. a microphone disposed on the casing 100. The user audio operation input may include sound-making actions made by the user with or without tools, e.g. singing, clapping, finger snapping, striking, beating with a stick, and these sound-making actions follow a specific rhythm. Each or several sounds are transformed into a timing-based input event, and theses timing-based input events reflect the rhythm. The user audio operation input is verified correct only when the controlling unit 103 determines that all input events of the user audio operation input substantially occur in a preset timing. In other words, the user audio operation input will be verified when it has the correct rhythm. We say that the user audio operation input conforms to a preset timing-based input set in this condition. The rhythm of the user audio operation input could be obtained by the technique of an automatic Karaoke evaluation system (e.g. Wei-Ho Tsai, Hsin-Chieh Lee, Automatic Evaluation of Karaoke Singing Based on Pitch, Volume, and Rhythm Features, IEEE Transactions on Audio Speech and Language Processing 20(4):1233-1243, May 2012) and the details about this evaluation system are not given herein. The user gesture operation input in Step 204 and the gesture operation verification procedure in Step 205 could be replaced with the user audio operation input and the corresponding audio operation verification procedure.

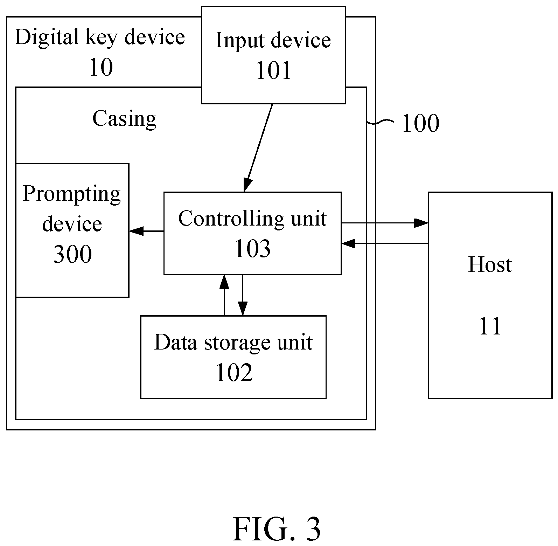

Please refer to FIG. 3, which is a block diagram illustrating a digital key device in communication with a host according to another embodiment of the present disclosure. In the embodiment, the digital key device 10 further includes a prompting device 300 configured to issue a light signal or a sound signal to prompt the user for the input timing of the timing-based input event(s). For example, the prompting device 300 could be a screen or a light emitting diode (LED) indicator (not shown) disposed on the casing 100. If the prompting device 300 is a screen, a prompt for the user operation is shown through the screen wherein the prompt may involve the timing, the designated action, the rhythm, the touch position or the like. If the prompting device 300 is a light emitting diode indicator, the timing of pressing or releasing the button is indicated by flashing light or a change in light color (e.g. in a specific rhythm). Also, the prompting device 300 could be a buzzer or a speaker (not shown) which beeps or gives a voice prompt to indicate the input timing for the timing-based input event(s). The prompting device 300 assists the user to catch the correct timing for the input action(s). It is to be noted that the real form of the prompting device 300 is not limited in the above embodiments. Taking a simplified condition as an example, in the first operation verification procedure, the user performs a single input action through the input device 101 at a specific time point. In an embodiment, following a prompt (e.g. a single light flash) issued by the prompting device 300, the user completes a single touch action, a single sliding action, a single pressing action or a single shaking action relative to the casing 100 or the input device 101 or a single sound-making action at a preset time point to provide the timing-based input event. Alternatively, following a series of prompts, (a series of light flashes) issued by the prompting device 300, the user completes a series of touch actions, a series of sliding actions, a series of pressing actions, a series of shaking actions, a series of sound-making actions or a combination thereof within a preset time period to provide the timing-based input events.

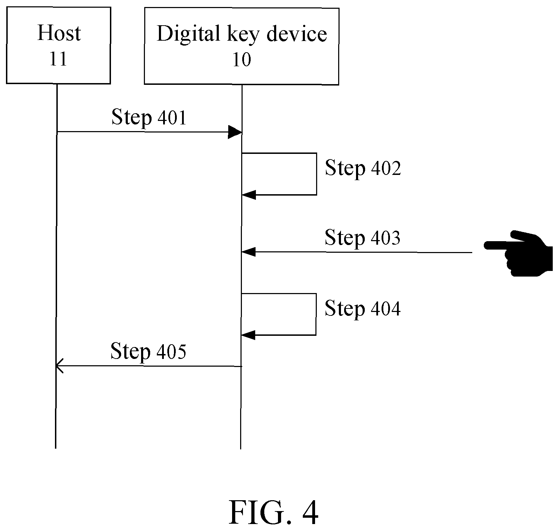

The method with reference to FIG. 2 could be further modified. Please refer to FIG. 4, which is a sequence diagram showing a data reading method according to an embodiment of the present disclosure. After the personal identification number verification procedure and the first operation verification procedure (e.g. gesture operation verification procedure or audio operation verification procedure) performed with the digital key device 10 and the host 11 are passed, a second operation verification procedure (e.g. gesture operation verification procedure or audio operation verification procedure) is introduced and performed by the controlling unit 103. Therefore, the authentication between the digital key device 10 and the host 11 includes the personal identification number verification procedure, the first operation verification procedure and the second operation verification procedure. For example, after the first operation verification procedure is passed, the host 11 sends a data read command together with a designated indexed address to the digital key device 10 (Step 401). The digital key device 10 receives the data read command, and then enters a wait mode (Step 402) to wait for user operation input (Step 403) for the second operation verification procedure. In the second operation verification procedure (Step 404), the digital key device 10 verifies whether the second timing-based input event(s) are correctly provided through the input device 101. If the received second timing-based input event(s) are verified correct, it is determined that the user stays with the digital key device 10 to use the digital key device 10 on-site and the second operation verification procedure is passed. The controlling unit 103 allows the digital data stored in the data storage unit 102 to be automatically transmitted to the host 11 according to the indexed address when both conditions, i.e. receiving the data read command and passing the authentication, are satisfied (Step 405). The digital data could be any type of information data or a user credential. According to the method, the data access to the digital key device 10 (e.g. the host 11 reads the digital data stored in the digital key device 10, or the digital key device 10 sends the user credential to the host 11 for user authentication) is permitted only when the entire authentication is completed and passed. By such verification and authentication mechanism in the data reading method, the data security is enhanced to prevent from malicious access through remote hacking. The second timing-based input set could be identical to the first timing-based input set or not as predetermined by the data owner. Further, the two timing-based operation inputs may adopt the gesture operation input and the audio operation input, respectively.

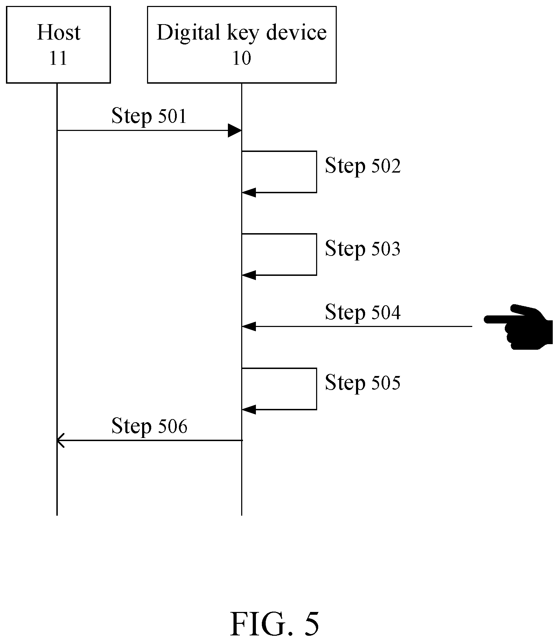

Please refer to FIG. 5, which is a sequence diagram showing a data encryption/decryption method according to an embodiment of the present disclosure. Similarly, the authentication includes a personal identification number verification procedure, a first operation verification procedure (e.g. gesture operation verification procedure or audio operation verification procedure) and a second operation verification procedure (e.g. gesture operation verification procedure or audio operation verification procedure), and all of these procedures are performed by the controlling unit 103. In the data encryption method, after the personal identification number verification procedure and the first operation verification procedure are passed, the host 11 sends a data encrypt command together with plaintext data to be encrypted to the digital key device 10 (Step 501). The data encrypt command may be a digital signing command. The digital key device 10 receives the data encrypt command and the plaintext data, and then uses a digital key stored in the data storage unit 102 to encrypt the plaintext data to generate corresponding encrypted data (ciphertext data) (step 502). Subsequently, the digital key device 10 enters a wait mode (Step 503) to wait for user operation input (e.g. user gesture operation input or user audio operation input) for the second operation verification procedure. After the user inputs the timing-based input event(s) of the second operation input through the input device 101 (Step 504), the digital key device 10 verifies whether the second user operation input as received is correct (Step 505). If the received second operation input is verified correct (i.e. conforming to the second preset timing-based input set), it is determined again that the authorized user stays with the digital key device 10 and the second operation verification procedure is passed. The controlling unit 103 allows the encrypted data to be transmitted to the host 11 in response to the data encrypt command on condition that the authentication is passed (Step 506). The encrypted data could be an encrypted file with and/or without a digital signature. For example, the encrypted file with a digital signature is outputted to the host 11, and the encrypted file without a digital signature is stored in the data storage unit 102 of the digital key device 10. According to the method, the digital key device 10 provides the digital key service using the digital key, and the host 11 can fetch the encrypted data only when the entire authentication is completed and passed. By such verification and authentication mechanism in the data encryption method, the data security is enhanced to prevent from malicious access to the encrypted data through remote hacking when the digital key device 10 is electrically coupled to the host 11. If the digital key device 10 is lost, the access to the encrypted data stored in the lost digital key device 10 without correct user operation input is also denied. Similarly, the second timing-based input set could be identical to the first timing-based input set or not as predetermined by the digital key owner, and the two timing-based input sets may adopt the same type of operation or not.

Please also refer to FIG. 5 for illustration of the data decryption method. After the personal identification number verification procedure and the first gesture operation verification procedure are passed, the host 11 sends a data decrypt command together with encrypted data (ciphertext data) to be decrypted to the digital key device 10 (Step 501). The digital key device 10 receives the data decrypt command and the encrypted data which is previously encrypted by using the digital key stored in the data storage unit 102 or an encrypt key corresponding to the digital key, and then uses the digital key to decrypt the encrypted data to generate corresponding decrypted data (plaintext data) (step 502). Subsequently, the digital key device 10 enters a wait mode (Step 503) to wait for user operation input (e.g. user gesture operation input or user audio operation input) for the second operation verification procedure. After the user inputs the timing-based input event(s) constructing the second operation input through the input device 101 (Step 504), the controlling unit 103 of the digital key device 10 verifies whether the second operation input as received is correct (Step 505). If the received second operation input is verified correct, i.e. conforming to the second preset timing-based input set, it is determined again that the authorized user stays with the digital key device 10 and the second operation verification procedure is passed. The controlling unit 103 allows the decrypted data to be transmitted to the host 11 in response to the data decrypt command on condition that the authentication is passed (Step 506). According to the method, the digital key device 10 provides the digital key service using the digital key, and the host 11 can fetch the decrypted data only when the entire authentication is completed and passed. By such verification and authentication mechanism in the data decryption method, the data security is enhanced to prevent from malicious access to the decrypted data through remote hacking when the digital key device 10 is electrically coupled to the host 11. Similarly, the second timing-based input set could be identical to the first timing-based input set or not as predetermined by the digital key owner, and the two timing-based input sets may adopt the same type of operation or not.

It is to be noted that the digital key service is not limited to the given illustrative embodiments such as data encryption and data decryption. The concepts of the present application can be applied to any digital service requiring a digital key. Such applications are also encompassed in the present application.

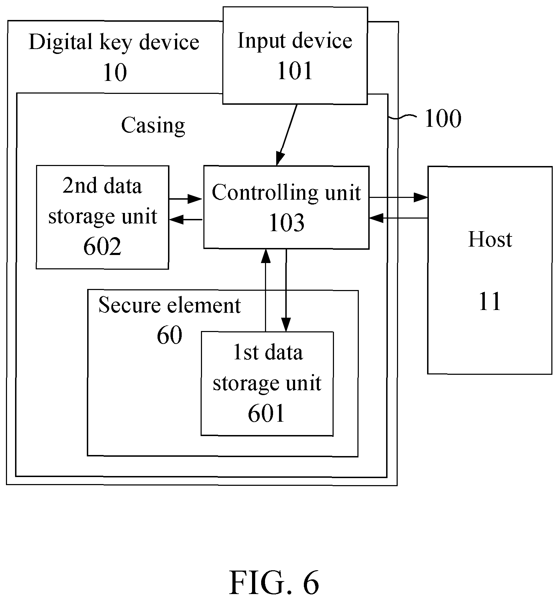

Please refer to FIG. 6, which is a block diagram illustrating a digital key device in communication with a host according to a further embodiment of the present disclosure. The digital key device 10 includes an input device 101 and a controlling unit 103 similar to the digital key device 10 described with reference to FIG. 1. The function and connection relation of similar elements could be obtained by referring to the above embodiments, and detailed description is not given herein. The digital key device 10 further includes a secure element (secure chip or secure cryptoprocessor) 60, and two separate data storage units 601 and 602 are arranged in the digital key device 10. The first data storage unit 601 is disposed in the secure element 60 protected from unauthorized access, and the second data storage unit 602 is disposed outside the secure element 60. The digital key and confidential data are stored in the first data storage unit 601, and non-confidential data are stored in the second data storage unit 602. The secure element 60 may achieve the Common Criteria for Evaluation Assurance Level 5+ (CC EAL5+), and the second data storage unit 602 could be a flash memory of a memory card.

According to the present disclosure, access to specific data or all data in the digital key device 10 through the host 11 requires double verification procedure in a two-way manner, including the personal identification number verification procedure and the operation verification procedure. The user operation input provided through the input device 101 of the digital key device 10, not the input device of the host 11 can prevent from undesired and uninvited remote operation. By this authentication mechanism, stealing the data stored in the digital key device 10 through remote hacking (e.g. side-channel attack, brute-force attack, cryptanalysis and exploiting software bug) of the host 11 is avoided. Further, compared to the conventional password, the timing-based input set has higher strength and can not be easily cracked. Through the second operation verification procedure, the digital key service or the digital key provided by the digital key device 10 is kept secure from being stolen or appropriated. It is advantageous that the digital key device 10 with data protection or digital key service function of the present disclosure can be used with the existing hosts or information devices to enhance data storage security.

The relative positions between and the arrangements of the elements, components and/or devices in the above embodiments are not limited to those shown in the drawings, and could be modified or adjusted to meet respective requirements. The steps of respective methods described in the above embodiments teach basic principles, but details of each step are adjustable and modifiable without departing from the given principles. The digital key device of the present disclosure can be applied to various kinds of information devices to enhance the data security and protect the data from impermissible access, especially through remote hacking.

## Claims

1. A digital key device (10) adapted to be in communication with a host (11), comprising:
a casing (100);
an input device (101), disposed near the casing (100) or mounted on the casing (100), receiving a first user operation input; and
a data storage unit (102), disposed in the casing (100), storing digital data and a digital key;
**characterised by**
a controlling unit (103), disposed in the casing (100) and in communication with the host (11), the input device (101) and the data storage unit (102), receiving to-be-encrypted data or to-be-decrypted data from the host (11) and using the digital key stored in the data storage unit (102) to encrypt the to-be-encrypted data or decrypt the to-be-decrypted data when authentication is complete, wherein the authentication comprises a first operation verification procedure for verifying the first user operation input, and the authentication is complete when the controlling unit (103) determines that the first user operation input conforms to a first preset timing-based input set.

2. The digital key device (10) according to claim 1, **characterised in that** the first user operation input is a gesture operation input and the input device (101) is
a touch button, a physical button or a touch pad exposed from the casing (100), the input device (101) receiving one or more user touch or pressing actions applied to the input device (101) to generate one or more timing-based input events in response to the one or more user touch or pressing actions, or
a vibration sensor disposed in the casing (100), the vibration sensor sensing vibration or touch made on the casing (100) held by the user to generate the one or more timing-based input events in response to the vibration or touch made on the casing (100).

3. The digital key device (10) according to claim 1, **characterised in that** the first user operation input is an audio operation input and the input device (101) is a microphone disposed on the casing (100), the microphone sensing a sound made by the user to generate one or more timing-based input events in response to a rhythm of the sound.

4. The digital key device (10) according to claim 2 or 3, **characterised in that** the one or more timing-based input events are generated according to a specific rhythm of the first user operation input and conform to an encoding format.

5. The digital key device (10) according to claim 2 or 3, **characterised in** comprising a prompting device (300) issuing a light signal or a sound signal to prompt the user for input timing of the first user operation input.

6. The digital key device (10) according to claim 1, **characterised in that** the authentication further comprises:
a personal identification number verification procedure prior to the first operation verification procedure after the digital key device (10) is electrically coupled to the host (11), wherein the digital key device (10) receives a personal identification number from the host (11) and verifies the received personal identification number; or
a second operation verification procedure posterior to the first operation verification procedure, wherein the digital key device (10) activates the second operation verification procedure to verify whether a second user operation input conforms to a second preset timing-based input set after completing the first operation verification procedure and receiving a command from the host (11); and the controlling unit (103) outputs the digital data, the encrypted data or the decrypted data to the host (11) or stores the encrypted data or the decrypted data in the data storage unit (102) in response to the command after the authentication is passed.

7. The digital key device (10) according to claim 1, **characterised in that** the data storage unit (102) includes a first data storage unit (601) and a second data storage unit (602), wherein the digital key is stored in the first data storage unit (601) disposed in a secure element (60), and the digital data are stored in the second data storage unit (602) separate from the secure element (60).

8. A method for activating a digital key service used with a host (11) and a digital key device (10), the digital key device (10) storing therein digital data and a digital key, the method comprising the steps of:
providing a first user operation input to the digital key device (10) (201, 401, 501);
**characterised by**
the digital key device (10) receiving to-be-encrypted data or to-be-decrypted data from the host (11) and activating the digital key service using the digital key stored in the digital key device (10) to encrypt the to-be-encrypted data or decrypt the to-be-decrypted data when authentication is complete, wherein the authentication comprises a first operation verification procedure for verifying the first user operation input (205, 505), and the authentication is complete when the first user operation input conforms to a first preset timing-based input set.

9. The method according to claim 8, **characterised in that** the first user operation input is a gesture operation input (204) including one or more touch actions, one or more sliding actions, one or more pressing actions, or one or more shaking actions applied to the digital key device (10) corresponding to one or more timing-based input events.

10. The method according to claim 8, **characterised in that** the first user operation input is an audio operation input including one or more sound-making actions of the user, the one or more sound-making actions following a rhythm and being corresponding to one or more timing-based input events.

11. The method according to claim 9 or 10, **characterised in that** the one or more timing-based input events are generated according to a specific rhythm of the first user operation input and conform to an encoding format.

12. The method according to claim 9 or 10, **characterised in** comprising a step of issuing a light signal or a sound signal through a prompting device (300) of the digital key device (10) to prompt the user for input timing of the first user operation input.

13. The method according to claim 8, **characterised in that** the authentication comprises a step of:
performing a personal identification number verification procedure prior to the first operation verification procedure after the digital key device (10) is electrically coupled to the host (11); or
activating a second operation verification procedure posterior to the first operation verification procedure to verify whether a second user operation input conforms to a second preset timing-based input set after completing the first operation verification procedure and receiving a command from the host (11).

14. The method according to claim 13, **characterised in that**
the command from the host (11) is a data read command and the method further comprises a step of outputting the digital data stored in the digital key device (10) to the host (11) in response to the data read command after the authentication is passed; or
the digital key service is using the digital key to encrypt the to-be-encrypted data received from the host (11) to generate encrypted data with a digital signature and the command from the host (11) is a digital signing command, and the method further comprises a step of outputting the encrypted data with the digital signature to the host (11) in response to the digital signing command after the authentication is passed.

15. The method according to claim 13, **characterised in that** the digital key service is using the digital key to encrypt the to-be-encrypted data received from the host (11) to generate encrypted data or decrypt the to-be-decrypted data received from the host (11) to generate decrypted data, and the command from the host (11) is a data encrypt command or a data decrypt command, the method further comprising a step of outputting the encrypted data or the decrypted data to the host (11) or storing the encrypted data or the decrypted data in the digital key device (10) in response to the data encrypt command or the data decrypt command after the authentication is passed.

## Patentansprüche

1. Eine digitale Schlüsselvorrichtung (10), die geeignet ist, mit einem Host (11) in Verbindung zu stehen, umfassend:
ein Gehäuse (100);
eine Eingabevorrichtung (101), die in der Nähe des Gehäuses (100) angeordnet oder an dem Gehäuse (100) angebracht ist und eine erste Benutzeroperationseingabe empfängt; und
eine Datenspeichereinheit (102), die im Gehäuse (100) angeordnet ist und digitale Daten und einen digitalen Schlüssel speichert
**gekennzeichnet durch**
eine Steuereinheit (103), die in dem Gehäuse (100) angeordnet und mit dem Host (11), der Eingabevorrichtung (101) und der Datenspeichereinheit (102) in Kommunikation steht, zu verschlüsselnde Daten oder zu entschlüsselnde Daten von dem Host (11) empfängt und den in der Datenspeichereinheit (102) gespeicherten digitalen Schlüssel verwendet, um die zu verschlüsselnden Daten zu verschlüsseln oder die zu entschlüsselnden Daten zu entschlüsseln, wenn die Authentifizierung abgeschlossen ist, wobei die Authentifizierung eine erste Operationsverifizierungsprozedur zum Verifizieren der ersten Benutzeroperationseingabe umfasst, und die Authentifizierung abgeschlossen ist, wenn die Steuereinheit (103) bestimmt, dass die erste Benutzeroperationseingabe mit einem ersten voreingestellten zeitbasierten Eingabesatz übereinstimmt.

2. Die digitale Schlüsselvorrichtung (10) nach Anspruch 1, wobei die erste Benutzeroperationseingabe eine Gestenoperationseingabe ist und die Eingabevorrichtung (101) ist
eine Berührungstaste, eine physische Taste oder ein Berührungsfeld, die aus dem Gehäuse (100) herausragen, wobei die Eingabevorrichtung (101) eine oder mehrere Berührungs- oder Druckaktionen des Benutzers empfängt, die auf die Eingabevorrichtung (101) angewendet werden, um ein oder mehrere zeitbasierte Eingabeereignisse in Reaktion auf die eine oder mehrere Berührungs- oder Druckaktionen zu erzeugen, oder
ein Vibrationssensor, der in dem Gehäuse (100) angeordnet ist, wobei der Vibrationssensor eine Vibration oder eine Berührung des vom Benutzer gehaltenen Gehäuses (100) erfasst, um das eine oder die mehreren zeitbasierten Eingabeereignisse als Reaktion auf die Vibration oder die Berührung des Gehäuses (100) zu erzeugen.

3. Die digitale Schlüsselvorrichtung (10) nach Anspruch 1, wobei die erste Benutzeroperationseingabe eine Audiooperationseingabe ist und die Eingabevorrichtung (101) ein Mikrofon ist, das am Gehäuse (100) angeordnet ist, wobei das Mikrofon einen vom Benutzer erzeugten Ton abtastet, um ein oder mehrere zeitbasierte Eingabeereignisse in Reaktion auf einen Rhythmus des Tons zu erzeugen.

4. Die digitale Schlüsselvorrichtung (10) nach Anspruch 2 oder 3, wobei die ein oder mehreren zeitbasierten Eingabeereignisse entsprechend einem bestimmten Rhythmus der ersten Benutzeroperationseingabe erzeugt werden und einem Kodierungsformat entsprechen.

5. Die digitale Schlüsselvorrichtung (10) nach Anspruch 2 oder 3, wobei sie eine Aufforderungsvorrichtung (300) umfasst, die ein Lichtsignal oder ein Tonsignal ausgibt, um den Benutzer zur Eingabezeitplanung der ersten Benutzeroperationseingabe aufzufordern.

6. Die digitale Schlüsselvorrichtung (10) nach Anspruch 1, wobei die Authentifizierung weiterhin umfasst:
eine Verifizierungsprozedur der persönlichen Identifikationsnummer vor der ersten Operationsverifizierungsprozedur, nachdem die digitale Schlüsselvorrichtung (10) mit dem Host (11) elektrisch gekoppelt ist, wobei die digitale Schlüsselvorrichtung (10) eine persönliche Identifikationsnummer von dem Host (11) empfängt und die empfangene persönliche Identifikationsnummer verifiziert; oder
eine zweite Operationsverifizierungsprozedur im Anschluss an die erste Operationsverifizierungsprozedur, wobei die digitale Schlüsselvorrichtung (10) die zweite Operationsverifizierungsprozedur aktiviert, um zu verifizieren, ob eine zweite Benutzeroperationseingabe mit einem zweiten voreingestellten zeitbasierten Eingabesatz übereinstimmt, nachdem die erste Operationsverifizierungsprozedur abgeschlossen wurde und ein Befehl vom Host (11) empfangen wurde; und die Steuereinheit (103) die digitalen Daten, die verschlüsselten Daten oder die entschlüsselten Daten an den Host (11) ausgibt oder die verschlüsselten Daten oder die entschlüsselten Daten in der Datenspeichereinheit (102) in Reaktion auf den Befehl speichert, nachdem die Authentifizierung bestanden wurde.

7. Die digitale Schlüsselvorrichtung (10) nach Anspruch 1, wobei die Datenspeichereinheit (102) eine erste Datenspeichereinheit (601) und eine zweite Datenspeichereinheit (602) umfasst, wobei der digitale Schlüssel in der in einem Sicherheitselement (60) angeordneten ersten Datenspeichereinheit (601) gespeichert ist und die digitalen Daten in der von dem Sicherheitselement (60) getrennten zweiten Datenspeichereinheit (602) gespeichert sind.

8. Ein Verfahren zum Aktivieren eines digitalen Schlüsseldienstes, der mit einem Host (11) und einer digitalen Schlüsselvorrichtung (10) verwendet wird, wobei die digitale Schlüsselvorrichtung (10) darin digitale Daten und einen digitalen Schlüssel speichert, wobei das Verfahren die folgenden Schritte umfasst:
Bereitstellen einer ersten Benutzeroperationseingabe für die digitale Schlüsselvorrichtung (10) (201, 401, 501);
**gekennzeichnet dadurch dass**
die digitale Schlüsselvorrichtung (10) zu verschlüsselnde Daten oder zu entschlüsselnde Daten von dem Host (11) empfängt und den digitalen Schlüsseldienst unter Verwendung des in der digitalen Schlüsselvorrichtung (10) gespeicherten digitalen Schlüssels aktiviert, um die zu verschlüsselnden Daten zu verschlüsseln oder die zu entschlüsselnden Daten zu entschlüsseln, wenn die Authentifizierung abgeschlossen ist, wobei die Authentifizierung eine erste Operationsverifizierungsprozedur zum Verifizieren der ersten Benutzeroperationseingabe (205 , 505 ) umfasst, und die Authentifizierung abgeschlossen ist, wenn die erste Benutzeroperationseingabe mit einem ersten voreingestellten zeitbasierten Eingabesatz übereinstimmt.

9. Das Verfahren nach Anspruch 8, wobei die erste Benutzeroperationseingabe eine Gestenoperationseingabe (204) ist, die eine oder mehrere Berührungsaktionen, eine oder mehrere Schiebeaktionen, eine oder mehrere Druckaktionen oder eine oder mehrere Schüttelaktionen umfasst, die auf die digitale Schlüsselvorrichtung (10) entsprechend einem oder mehreren zeitbasierten Eingabeereignissen angewendet werden.

10. Das Verfahren nach Anspruch 8, wobei die erste Benutzeroperationseingabe eine Audiooperationseingabe ist, die eine oder mehrere klangerzeugende Aktionen des Benutzers umfasst, wobei die eine oder mehreren klangerzeugenden Aktionen einem Rhythmus folgen und einem oder mehreren zeitbasierten Eingabeereignissen entsprechen.

11. Das Verfahren nach Anspruch 9 oder 10, wobei die ein oder mehreren zeitbasierten Eingabeereignisse entsprechend einem bestimmten Rhythmus der ersten Benutzeroperationseingabe erzeugt werden und einem Kodierungsformat entsprechen.

12. Das Verfahren nach Anspruch 9 oder 10, wobei es einen Schritt des Ausgebens eines Lichtsignals oder eines Tonsignals durch eine Aufforderungsvorrichtung (300) der digitalen Schlüsselvorrichtung (10) umfasst, um den Benutzer zur Eingabezeit der ersten Benutzeroperationseingabe aufzufordern.

13. Das Verfahren nach Anspruch 8, wobei die Authentifizierung zumindest einen der folgenden Schritte umfasst:
Durchführen einer Verifizierungsprozedur der persönlichen Identifikationsnummer vor der ersten Operationsverifizierungsprozedur, nachdem die digitale Schlüsselvorrichtung (10) mit dem Host (11) elektrisch gekoppelt ist; oder
Aktivieren einer zweiten Operationsverifizierungsprozedur im Anschluss an die erste Operationsverifizierungsprozedur, um zu überprüfen, ob eine zweite Benutzeroperationseingabe mit einem zweiten voreingestellten zeitbasierten Eingabesatz übereinstimmt, nachdem die erste Operationsverifizierungsprozedur abgeschlossen wurde und ein Befehl vom Host (11) empfangen wurde.

14. Das Verfahren nach Anspruch 13, wobei
der Befehl vom Host (11) ein Datenlesebefehl ist und das Verfahren ferner einen Schritt der Ausgabe der in der digitalen Schlüsselvorrichtung (10) gespeicherten digitalen Daten an den Host (11) als Reaktion auf den Datenlesebefehl umfasst, nachdem die Authentifizierung bestanden ist; oder
der digitale Schlüsseldienst den digitalen Schlüssel verwendet, um die vom Host (11) empfangenen zu verschlüsselnden Daten zu verschlüsseln, um verschlüsselte Daten mit einer digitalen Signatur zu erzeugen, und der Befehl vom Host (11) ein digitaler Signierbefehl ist, und das Verfahren ferner einen Schritt der Ausgabe der verschlüsselten Daten mit der digitalen Signatur an den Host (11) als Reaktion auf den digitalen Signierbefehl umfasst, nachdem die Authentifizierung bestanden ist.

15. Das Verfahren nach Anspruch 13, wobei der digitale Schlüsseldienst den digitalen Schlüssel verwendet, um die vom Host (11) empfangenen zu verschlüsselnden Daten zu verschlüsseln, um verschlüsselte Daten zu erzeugen, oder um die vom Host (11) empfangenen zu entschlüsselnden Daten zu entschlüsseln, um entschlüsselte Daten zu erzeugen, und dass der Befehl vom Host (11) ein Datenverschlüsselungsbefehl oder ein Datenentschlüsselungsbefehl ist, das Verfahren ferner einen Schritt des Ausgebens der verschlüsselten Daten oder der entschlüsselten Daten an den Host (11) oder des Speicherns der verschlüsselten Daten oder der entschlüsselten Daten in der digitalen Schlüsselvorrichtung (10) als Reaktion auf den Datenverschlüsselungsbefehl oder den Datenentschlüsselungsbefehl, nachdem die Authentifizierung bestanden ist, umfasst.

## Revendications

1. Un dispositif à clé numérique (10) adapté pour être en communication avec un hôte (11), comprenant :
un boîtier (100) ;
un dispositif de saisie (101), disposé à proximité du boîtier (100) ou monté sur le boîtier (100), recevant une première entrée d'opération de l'utilisateur ; et
une unité de stockage de données (102), disposée dans le boîtier (100), stockant des données numériques et une clé numérique
**caractérisé par**
une unité de contrôle (103), disposée dans le boîtier (100) et en communication avec l'hôte (11), le dispositif de saisie (101) et l'unité de stockage de données (102), recevant des données à crypter ou des données à décrypter de l'hôte (11) et utilisant la clé numérique stockée dans l'unité de stockage de données (102) afin de crypter les données à crypter ou décrypter les données à décrypter lorsque l'authentification est terminée, l'authentification comprend une première procédure de vérification de l'opération afin de vérifier la première entrée d'opération de l'utilisateur, et l'authentification est terminée lorsque l'unité de contrôle (103) détermine que la première entrée d'opération de l'utilisateur est conforme à un premier ensemble d'entrées prédéfinies basées sur le temps.

2. Le dispositif à clé numérique (10) selon la revendication 1, dans lequel la première entrée d'opération de l'utilisateur est une entrée d'opération gestuelle et que le dispositif de saisie (101) est
un bouton tactile, un bouton physique ou un pavé tactile exposé à partir du boîtier (100), le dispositif de saisie (101) recevant une ou plusieurs actions de toucher ou de pression de l'utilisateur appliquées au dispositif de saisie (101) afin de générer un ou plusieurs événements d'entrée basés sur le temps en réponse à la ou aux plusieurs actions de toucher ou de pression de l'utilisateur, ou
un capteur de vibrations disposé dans le boîtier (100), le capteur de vibrations détectant les vibrations ou le toucher du boîtier (100) tenu par l'utilisateur afin de générer l'un ou les plusieurs événements d'entrée basés sur le temps en réponse aux vibrations ou au toucher du boîtier (100).

3. Le dispositif à clé numérique (10) selon la revendication 1, dans lequel la première entrée d'opération de l'utilisateur est une entrée d'opération audio et que le dispositif de saisie (101) est un microphone disposé sur le boîtier (100), le microphone détectant un son émis par l'utilisateur afin de générer un ou plusieurs événements d'entrée basés sur le temps en réponse à un rythme du son.

4. Le dispositif à clé numérique (10) selon la revendication 2 ou 3, dans lequel l'un ou les plusieurs événements d'entrée basés sur le temps sont générés en fonction d'un rythme spécifique de la première entrée d'opération de l'utilisateur et se conforment à un format d'encodage.

5. Le dispositif à clé numérique (10) selon la revendication 2 ou 3, comprennant un dispositif d'invite (300) émettant un signal lumineux ou un signal sonore afin d'inviter l'utilisateur à synchroniser l'entrée de la première entrée d'opération de l'utilisateur.

6. Le dispositif à clé numérique (10) selon la revendication 1, dans lequel l'authentification comprend en outre :
une procédure de vérification du numéro d'identification personnel avant la première procédure de vérification de l'opération après que le dispositif à clé numérique (10) est couplé électriquement à l'hôte (11), dans laquelle le dispositif à clé numérique (10) reçoit un numéro d'identification personnel de l'hôte (11) et vérifie le numéro d'identification personnel reçu ; ou
une deuxième procédure de vérification d'opération postérieure à la première procédure de vérification d'opération, dans laquelle le dispositif à clé numérique (10) active la deuxième procédure de vérification d'opération afin de vérifier si une deuxième entrée d'opération de l'utilisateur est conforme à un deuxième ensemble prédéfini d'entrées basées sur le temps après avoir terminé la première procédure de vérification d'opération et reçu une commande de l'hôte (11) ; et l'unité de contrôle (103) émet les données numériques, les données cryptées ou les données décryptées vers l'hôte (11) ou stocke les données cryptées ou les données décryptées dans l'unité de stockage de données (102) en réponse à la commande après que l'authentification a été réussie.

7. Le dispositif à clé numérique (10) selon la revendication 1, dans lequel l'unité de stockage de données (102) comprend une première unité de stockage de données (601) et une seconde unité de stockage de données (602), dans laquelle la clé numérique est stockée dans la première unité de stockage de données (601) disposée dans un élément de sécurité (60), et les données numériques sont stockées dans la seconde unité de stockage de données (602) séparée de l'élément de sécurité (60).

8. Un procédé pour activer un service de clé numérique utilisé avec un hôte (11) et un dispositif à clé numérique (10), le dispositif à clé numérique (10) stockant des données numériques et une clé numérique, le procédé comprenant les étapes suivantes :
fournir une première entrée d'opération de l'utilisateur au dispositif à clé numérique (10) (201, 401, 501) ;
**caractérisé par**
le dispositif à clé numérique (10) reçoit des données à crypter ou des données à décrypter de l'hôte (11) et active le service de clé numérique à l'aide de la clé numérique stockée dans le dispositif à clé numérique (10) afin de crypter les données à crypter ou décrypter les données à décrypter lorsque l'authentification est terminée, l'authentification comprend une première procédure de vérification d'opération afin de vérifier la première entrée d'opération de l'utilisateur (205 , 505), et l'authentification est terminée lorsque la première entrée d'opération de l'utilisateur est conforme à un premier ensemble d'entrées prédéfinies basées sur le temps.

9. Le procédé selon la revendication 8, dans lequel la première entrée d'opération de l'utilisateur est une entrée d'opération gestuelle (204) comprenant une ou plusieurs actions tactiles, une ou plusieurs actions de glissement, une ou plusieurs actions de pression, ou une ou plusieurs actions d'agitation appliquées au dispositif à clé numérique (10) correspondant à un ou plusieurs événements d'entrée basés sur le temps.

10. Le procédé selon la revendication 8, dans lequel la première entrée d'opération de l'utilisateur est une entrée d'opération audio comprenant une ou plusieurs actions sonores de l'utilisateur, l'une ou les plusieurs actions sonores suivant un rythme et correspondant à un ou plusieurs événements d'entrée basés sur le temps.

11. Le procédé selon la revendication 9 ou 10, dans lequel l'un ou les plusieurs événements d'entrée basés sur le temps sont générés en fonction d'un rythme spécifique de la première entrée d'opération de l'utilisateur et sont conformes à un format d'encodage.

12. Le procédé selon la revendication 9 ou 10, comprenant une étape consistant à émettre un signal lumineux ou un signal sonore par l'intermédiaire d'un dispositif d'invite (300) du dispositif à clé numérique (10) afin d'inviter l'utilisateur à synchroniser l'entrée de la première entrée d'opération de l'utilisateur.

13. Le procédé selon la revendication 8, dans lequel l'authentification comprend une étape consistant à :
effectuer une procédure de vérification du numéro d'identification personnel avant la première procédure de vérification de l'opération après que le dispositif à clé numérique (10) a été couplé électriquement à l'hôte (11) ; ou
activer une deuxième procédure de vérification d'opération postérieure à la première procédure de vérification d'opération afin de vérifier si une deuxième entrée d'opération de l'utilisateur est conforme à un deuxième ensemble prédéfini d'entrées basées sur le temps après avoir terminé la première procédure de vérification d'opération et reçu une commande de l'hôte (11).

14. Le procédé selon la revendication 13, dans lequel
la commande de l'hôte (11) est une commande de lecture de données et le procédé comprend en outre une étape de sortie des données numériques stockées dans le dispositif à clé numérique (10) vers l'hôte (11) en réponse à la commande de lecture de données après que l'authentification a été réussie ; ou
le service de clé numérique utilise la clé numérique afin de crypter les données à crypter reçues de l'hôte (11) afin de générer des données cryptées avec une signature numérique et la commande de l'hôte (11) est une commande de signature numérique, et le procédé comprend en outre une étape de sortie des données cryptées avec la signature numérique vers l'hôte (11) en réponse à la commande de signature numérique après que l'authentification a été réussie.

15. Le procédé selon la revendication 13, dans lequel le service de clé numérique utilise la clé numérique afin de crypter les données à crypter reçues de l'hôte (11) afin de générer des données cryptées ou afin de décrypter les données à décrypter reçues de l'hôte (11) afin de générer des données décryptées, et la commande de l'hôte (11) est une commande de cryptage des données ou une commande de décryptage des données, le procédé comprend en outre une étape consistant à envoyer les données cryptées ou les données décryptées à l'hôte (11) ou à stocker les données cryptées ou les données décryptées dans le dispositif à clé numérique (10) en réponse à la commande de cryptage des données ou à la commande de décryptage des données après que l'authentification a été réussie.
